# EUROPÄISCHE PATENTSCHRIFT

(11) **EP 3 418 070 B1**
(45) Veröffentlichungstag und Bekanntmachung des Hinweises auf die Patenterteilung: **12.04.2023**
(21) Anmeldenummer: 18000525.8
(22) Anmeldetag: 15.06.2018
(51) Int. Cl.: B60B 33/02, B60B 33/00

(54) **FESTSTELLBARE LENKROLLE**
BRAKED CASTOR
GALET DÉFLECTEUR POUVANT SE DÉPLACER

(30) Priorität: 23.06.2017 DE 102017113925; 23.06.2017 DE 202017103750 U
(43) Veröffentlichungstag der Anmeldung: 26.12.2018
(73) Patentinhaber: Wiemers, Christiane, 34414 Warburg (DE)
(72) Erfinder: Wiemers, Christiane, 34414 Warburg (DE)
(74) Vertreter: Rolf, Gudrun

(56) Entgegenhaltungen:
- DE-A1- 3 633 845
- DE-A1- 19 836 454
- US-A- 4 205 413

## Beschreibung

Die Erfindung betrifft eine feststellbare Lenkrolle für rollbare Möbel und Geräte, mit einer um eine vertikale Hochachse verschwenkbar auf einer horizontalen Querachse eines Lagerkörpers gelagerten Rolle oder Doppelrolle und mit einem Befestigungsflansch mit einem Schwenklager sowie einem auf die Rolle absenkbaren Feststeller, wobei der Feststeller beweglich zwischen Befestigungsflansch und der Rolle angeordnet ist und obere und untere Funktionsflächen mit diesen aufweist, eine untere Funktionsfläche zwischen Feststeller und Rolle in jeder Winkelstellung der Rolle eine horizontale Bremsfläche bildet und eine obere Funktionsfläche zwischen Feststeller und Befestigungsflansch und/ oder dessen dem Feststeller zugewandte Flanschfläche mindestens eine in Richtung auf die gegenüberliegende Fläche vorspringende schiefe Ebene aufweist, die am Übergang der horizontalen Fläche des Feststellers und/ oder des Befestigungsflansches zu der mindestens einen schiefen Ebene beginnt und die jeweils gegenüberliegende Fläche entweder eine vorstehende Rastfläche oder eine von der Fläche abgehende, gegensinnig vorspringende schiefe Ebene und der Feststeller aus einer ungebremsten Position vor oder am flächennahen Beginn einer schiefen Ebene in Kontakt mit der gegenseitigen Rastfläche oder schiefen Ebene in eine gebremste Position der Lenkrolle mit auf der schiefen Ebene aufgelaufenen Rastfläche oder gegensinnig aufgelaufenen schiefe Ebene bewegt ist, in der die Bremsfläche des Feststellers auf die Oberfläche der Rolle angedrückt gehalten ist Solche feststellbaren Lenkrollen sind seit langem bekannt, DD 48 920 A1, die einen in tangentialer oder radialer über eine Rolle vorstehenden Fußbremshebel aufweisen, der den Nachteil aufweist nur dann zugänglich zu sein, wenn sich die Lenkrolle mit dem Fußbremshebel in einer für eine Fußspitze zugänglichen Position befindet. Um dieses Problem zu überwinden ist es weiterhin bekannt, DE 198 36 454 A1, über ringförmige Lager verschwenkbare Lagerkörper durch ihre vertikalen Schwenkachsen hindurch mit vertikal verstellbaren Vorrichtungen auszustatten, die in einem festgestellten Zustand mit Bremsbelägen auf einer Rolle aufliegen.

Es ist des Weiteren auch ein Schwenksperren- und Bremsmechanismus für Lenkrollen bekannt, US 4 205 413 A, der einen horizontalen Stellring mit nach unten gerichteten Nocken sowie darunter einen Bremsring mit Aussparungen, Nockenrampen und flachen Oberseiten für die Nocken aufweist, um in Abhängigkeit von seinem Verdrehwinkel mit seiner Unterseite eine Lenkrolle festzusetzen oder freizugeben.

Nachteilig an diesem vorbekannten Stand der Technik ist jedoch seine ausgesprochene Kompliziertheit und die Vielzahl erforderlicher Bauteile, sodass die bekannte Vorrichtung nicht nur sehr unwirtschaftlich ist, sondern eine Vielzahl an möglichen Fehlfunktionen aufweist. Des Weiteren bauen die bekannten feststellbaren Lenkrollen sehr hoch und die Bedienbarkeit der Mechanik erfordert eine gute Zugänglichkeit der Verstellhebel, die zum Teil optisch oder auch räumlich störend über die Kontur eines Möbels hervorstehen können.

Aufgabe der Erfindung ist es eine feststellbare Lenkrolle zur Verfügung zu stellen, die weniger hoch baut und unabhängig von der Position der Rolle feststellbar und die wirtschaftlich herstellbar ist, ebenso wie sie technisch einfachst und dauerhaft funktionstüchtig ausgebildet sein soll, ohne das ein Feststeller seitlich über die Kontur eines Möbels hervorsteht.

Die Lösung dieser Aufgabe ergibt sich in Verbindung mit den Merkmalen des Oberbegriffes erfindungsgemäß im Zusammenhang mit den technischen Merkmalen des kennzeichnenden Teils des ersten Patentanspruches.

Der Feststeller der Lenkrolle ist dabei beweglich zwischen deren Befestigungsflansch und der Rolle angeordnet und weist obere und untere Funktionsflächen mit den Rollen und dem Befestigungsflansch auf, wobei eine nach unten gerichtete untere Funktionsfläche zwischen Feststeller und Rolle in jeder Winkelstellung der Rolle eine horizontale Bremsfläche bildet und eine nach oben gerichtete obere Funktionsfläche zwischen Feststeller und Befestigungsflansch und/ oder dessen dem Feststeller zugewandte Flanschfläche mindestens eine in Richtung auf die gegenüberliegende Fläche vorspringende schiefe Ebene aufweist und die jeweils gegenüberliegende Fläche entweder eine vorstehende Rastfläche oder eine gegensinnig vorspringende schiefe Ebene, sodass der Feststeller aus einer ungebremsten Position vor oder am flächennahen Beginn einer schiefen Ebene in Kontakt mit der gegenseitigen Rastfläche oder schiefen Ebene in eine gebremste Position der Lenkrolle mit auf die schiefe Ebene aufgelaufene Rastfläche oder gegensinnig aufgelaufenen schiefen Ebene bewegt ist, in der die Bremsfläche des Feststellers auf die Oberfläche der Rolle angedrückt gehalten ist.

Hierdurch wird auf eine höchst einfache Art und Weise mit wenig Bauteilen, die zudem aus Kunststoff gefertigt sein können, eine feststellbare Lenkrolle zur Verfügung gestellt, die gegenüber dem bekannten Stand der Technik erheblich wirtschaftlicher ist und aufgrund ihrer Einfachheit Fehlfunktionen oder Funktionsstörungen weitestgehend ausschließt. Der Feststeller lässt sich in jeder Winkelstellung der Rolle bedienen, wobei seine horizontale Bremsfläche die Rollen in jeder Winkelstellung zu mehr als der Hälfte überdeckt.

Der Befestigungsflansch ist dabei vorteilhaft topfförmig als Rollentopf ausgebildet und in einer Ausnehmung eines Unterbodens eines Möbels oder Gerätes versenkt eingebaut, wobei der Rollentopf eine zu einer Seite eines Möbels horizontale Öffnung aufweist, in die sich der Feststellhebel seitlich hinein erstreckt, der jedoch mindestens in beiden Endlagen hinter die Kontur des Rollentopfes und des Möbels zurücktritt, sodass durch diese erfinderische Lösung das lenkrollengelagerte Möbel sehr tief über einem Boden angeordnet werden kann, da der Rollentopf im unteren Möbelboden versenkt ist, ebenso wie durch den seitlich zugänglichen Feststellhebel sichergestellt wird, dass der Feststeller in jeder Rollenposition einer Lenkrolle problemlos bedienbar bleibt, ohne störend über die Kontur eines Möbels hervorzustehen.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform der Erfindung weist der Befestigungsflansch ein vertikales Schwenklager für eine vertikale Tragachse des Lagerköpers auf sowie einen runden Flanschteller mit einer nach oben gerichteten runden Flanschfläche, sodass der Befestigungsflansch einfach von unten unter einem Möbelboden oder einer Unterkonstruktion befestigbar ist, wozu sich das Schwenklager vorteilhafterweise spielfrei durch eine angepasste Bohrung im unteren Möbelboden oder der Unterkonstruktion erstreckt, wodurch die Lenkrolle sehr große Kräfte aufnehmen kann. Weiterhin weist der Flanschteller eine nach unten gerichtete Funktionsfläche auf, die mit der nach oben gerichteten Funktionsfläche des Feststellers erfindungsgemäß zusammenwirkt.

Der Feststeller selber besitzt eine scheibenförmige runde Grundform mit oberen und unteren Funktionsflächen sowie einen sich radial erstreckenden Feststellhebel, wobei der Feststeller um die vertikale Hochachse um die Tragachse herum verschwenkbar ausgebildet ist.

Vorteilhafterweise schließt sich der schiefen Ebene endseitig eine horizontale Rastfläche an, sodass nach der Beendigung der Bewegung des Feststellhebels jeweils horizontale Rastflächen der oberen Funktionsfläche des Feststellers und der unteren Funktionsfläche des Befestigungsflansches berühren, sodass der Feststeller keine unerwünschten Rückstellkräfte in eine nicht festgestellte Position der Lenkrolle erfährt.

Zur Verbindung des Feststellers mit dem Befestigungsflansch erstreckt sich von der Funktionsfläche des Befestigungsflansches ein Führungs- und Haltestift in Richtung des Feststellers in oder durch eine Führungsausnehmung des Feststellers, wodurch dieser auf einfachste Art und Weise um das Schwenklager der Lenkrolle herum verdrehbar geführt ist.

Entsprechend einer bevorzugten Ausführungsform der Erfindung ist die Rolle als Doppelrolle ausgebildet, wobei sich die Bremsfläche des Feststellers im festgestellten Zustand jeweils auf beiden Rollen abstützt, sodass sich neben einer doppelten Tragkraft einer solchen Doppelrolle auch eine weiter gesteigerte Bremskraft einstellt.

Insgesamt ist diese feststellbare Lenkrolle aus nur einer Rolle oder Doppelrolle, einem einteiligen Lagerkörper, einer Rollenachse, einer Tragachse, einem einteiligen Befestigungsflansch und einem einteiligen Feststeller aufgebaut, wobei die wesentlichen Bauteile aus Kunststoffspritzgussteilen ausgeformt sein können, sodass damit eine sehr wirtschaftliche und dauerhaltbare und einfache feststellbare Lenkrolle zur Verfügung gestellt werden kann.

Gemäß einer möglichen bevorzugten Weiterbildung der Erfindung sind die schiefen Ebenen auch als ein- oder mehrzügige Gewindegänge von gegenseitigen Gewinden des Befestigungsflansches und des Feststellers ausgebildet.

Bei einer anderen denkbaren vorteilhaften Ausgestaltung der Erfindung ist der Feststeller im Wesentlichen linear verschieblich zwischen dem Befestigungsflansch und der Rolle angeordnet und die schiefen Ebenen beidseitig der Tragachse gradlinig ausgebildet, so dass durch ein Einschieben des Feststellers auch hier eine Feststellfunktion unabhängig von der Position der Lenkrollen erzeugt wird.

Nachfolgend sind zwei Ausführungsbeispiele anhand von Zeichnungen näher beschrieben. Es zeigen:
- Fig. 1: eine räumliche Ansicht eines unteren Möbelbodens mit daran angeordneten feststellbaren und nicht feststellbaren Lenkrollen,
- Fig. 2: eine Explosionszeichnung einer feststellbaren Lenkrolle von schräg oben,
- Fig. 3: eine Explosionszeichnung eines Feststellers und eines Befestigungsflansches in Ansicht von schräg unten,
- Fig. 4: eine räumliche Explosionszeichnung eines Rollentopfes gemäß der Erfindung mit feststellbarer Lenkrolle von schräg unten,
- Fig. 5: eine verkleinerte Darstellung eines zusammengesetzten Rollentopfes gemäß der Erfindung mit feststellbarer Lenkrolle von unten,
- Fig. 6: eine Vorderansicht des Rollentopfes gemäß der Erfindung nach Fig. 5,
- Fig. 7: eine geschnittene Seitenansicht des Rollentopfes gemäß der Erfindung nach Fig. 5,
- Fig. 8: eine Unteransicht eines Möbelbodens mit zwei nicht feststellbaren und zwei feststellbaren Lenkrollen in verkleinerter Darstellung gemäß der Erfindung, und
- Fig. 9: eine Vorderansicht eines Büromöbels gemäß der Erfindung nach Fig. 8 in verkleinerter Darstellung .

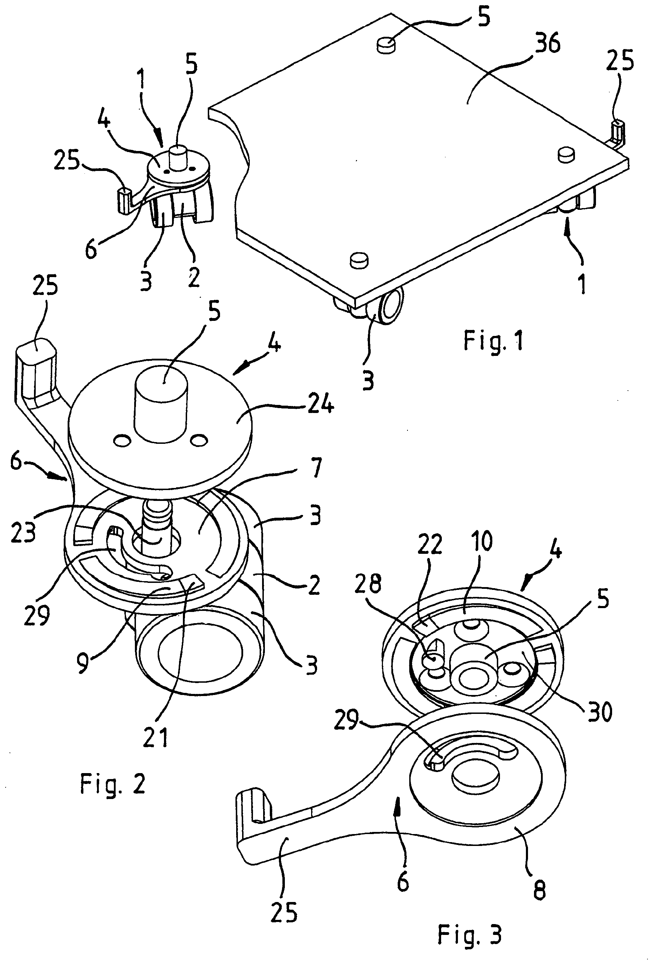

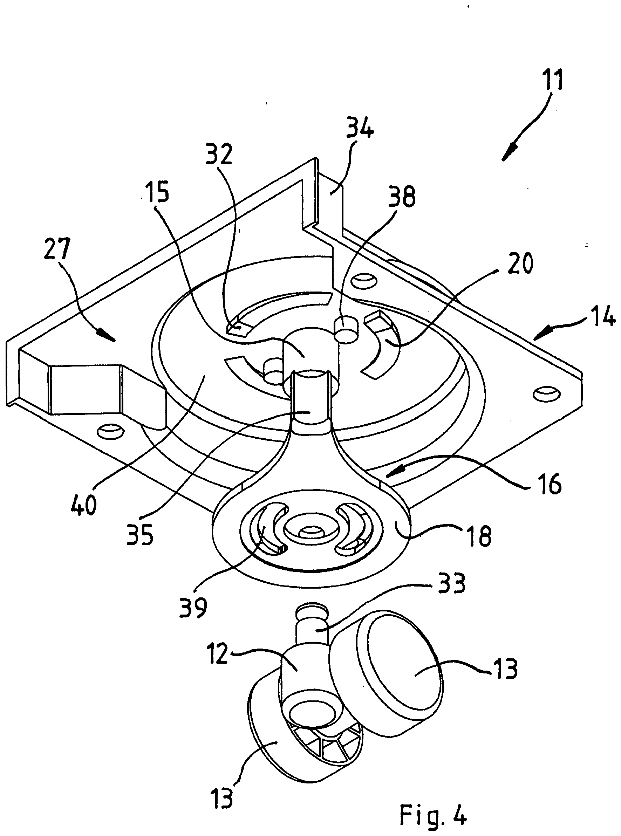

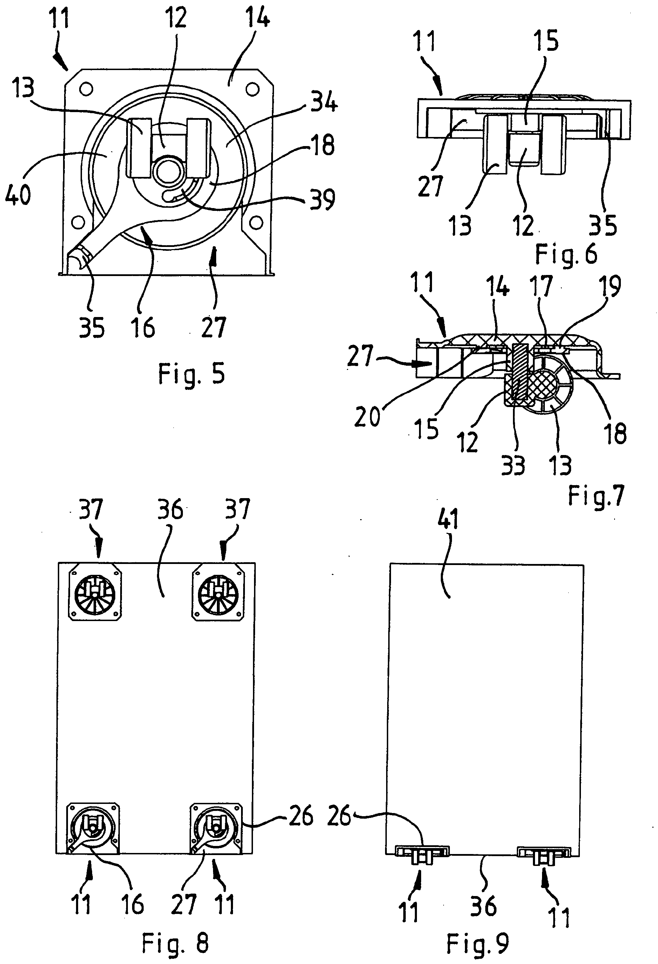

Die feststellbare Lenkrolle 1;11 besteht aus einem Lagerkörper 2;12 an dem seitlich zwei Doppelrollen 3;13 auf einer zeichnerisch nicht dargestellten horizontalen Querachse befestigt sind. Im Lagerkörper 2;12 ist eine vertikale Tragachse 23;33 gelagert, die sich mit ihrem oberen Ende in ein Schwenklager 5;15 eines oberen Befestigungsflansches 4;14 erstreckt. Der Befestigungsflansch 4, wie er in den Fig. 1 und 2 dargestellt ist, weist neben dem Schwenklager 5 einen kreisrunden Flanschteller 24 mit einer oberen Flanschfläche auf, der Bohrungen aufweist, über die er unter einem unteren Möbelboden oder einer sonstigen rollbaren Unterkonstruktion festgelegt werden kann. Der Befestigungsflansch 14 der Ausführungsform gemäß der Erfindung, wie sie in den Fig. 4 bis 9 dargestellt ist, ist als Rollentopf 34 ausgebildet, der in einer Ausnehmung 26 in einem unteren Möbelboden oder einer anderen Unterkonstruktion eingesetzt werden kann, um diese möglichst bodennah zu gestalten.

Die feststellbare Lenkrolle 1;2 weist einen Feststeller 6;16 auf, der zwischen dem Befestigungsflansch 4;14 und der oder den Rollen 3;13 eingesetzt ist, wobei er eine kreisrunde obere Funktionsfläche 7;17 und eine ebensolche untere Funktionsfläche 8;18 aufweist sowie einen Feststellhebel 25;35, über den der Feststeller 6;16 um einen Winkelbereich von etwa 90 Grad gegen den Befestigungsflansch 4;14 verschwenkbar ist.

Die untere Funktionsfläche 8;18 des Feststellers 6;16 dient als Bremsfläche, da sie im festgestellten Modus auf der Oberseite der Rollen 3;13 angedrückt gehalten ist und so die Lenkrolle 1;11 in der Rotation der Rollen 3;13 um ihre Querachse ebenso wie die Drehung der Lenkrolle 1;11 um ihre vertikale Hochachse verriegelt.

Die obere Funktionsfläche 7;17 ist ebenso wie die dieser zugewandte Funktionsfläche 30;40 des Befestigungsflansches 4;14 mit etwa drittelkreisförmig regelmäßig auf einem Kreis angeordneten schiefen Ebenen 9;10;19;20 ausgestattet, wobei die schiefen Ebenen 9;10;19;20 der oberen Funktionsfläche 7;17 und der Funktionsfläche 30;40 des Befestigungsflansches 4;14 jeweils gegensinnig ausgerichtet sind, sodass bei einer Schwenkbewegung des Feststellers 6;16 die schiefen Ebenen 9;10;19;20 aufeinander aufgleiten, um so den Abstand zwischen Feststeller 6;16 und der Unterseite des Befestigungsflansches 4;14 zu vergrößern bzw. die als Bremsfläche ausgebildete untere Funktionsfläche 8;18 des Feststellers 6;16 auf die Rollen 3;13 zu drücken. Am Ende der schiefen Ebene 9;10;19;20 sind jeweils Rastflächen 21;22;32 angeordnet, sodass im festgestellten Zustand der Lenkrolle 1;11 keine Rückstellkräfte in den Feststeller 6;16 eingeleitet oder darin erzeugt werden.

Zur optimalen Führung des Feststellers 6;16 ist im Feststeller 6;16 eine Führungsausnehmung 29;39 angeordnet, in die sich ein Führungsstift 28;38 erstreckt, der auf der Funktionsfläche 30;40 des Flanschtellers 24 bzw. des Rollentopfes 34 angeordnet ist.

Die feststellbare Lenkrolle 1 gemäß den Fig. 1 bis 3 erstreckt sich mit ihrem Schwenklager 5 durch eine entsprechende Bohrung im unteren Möbelboden 36 oder der einer Unterkonstruktion und wird über Bohrungen im Befestigungsflansch 4 darunter festgelegt, wohingegen die feststellbare Lenkrolle 11 gemäß der Erfindung und wie dargestellt in den Fig. 4 bis 9 in

Ausnehmungen 26 in einem unteren Möbelboden 36 angeordnet ist, wobei der Rollentopf 34 eine stirnseitig nach vorne gerichtete horizontale Öffnung 27 aufweist, durch die der Feststellhebel 35 zugänglich ist und aus einer ungebremsten Position in eine festgestellte Position der Lenkrolle 11 verschwenkbar ist, ohne dass er in einer der beiden Positionen über die Körperkontur des Möbels 41 hervorsteht.

## Patentansprüche

1. Feststellbare Lenkrolle für rollbare Möbel und Geräte mit einer um eine vertikale Hochachse verschwenkbar auf einer horizontalen Querachse eines Lagerkörpers (12) gelagerten Rolle (13) oder Doppelrolle und mit einem Befestigungsflansch (14) mit einem Schwenklager (15) sowie einem auf die Rolle (13) absenkbaren Feststeller (16), wobei der Feststeller (16) beweglich zwischen Befestigungsflansch (14) und der Rolle (13) angeordnet ist und obere und untere Funktionsflächen (17, 18) mit diesen aufweist, eine untere Funktionsfläche (18) zwischen Feststeller (16) und Rolle (13)
in jeder Winkelstellung der Rolle (13) eine horizontale Bremsfläche bildet und eine obere Funktionsfläche (17) zwischen Feststeller (16) und Befestigungsflansch (14) und/ oder dessen dem Feststeller (16) zugewandte Flanschfläche mindestens eine in Richtung auf die gegenüberliegende Fläche vorspringende schiefe Ebene (19, 20) aufweist, die am Übergang der horizontalen Fläche des Feststellers (16) und/ oder des Befestigungsflansches (14) zu der mindestens einen schiefen Ebene (19, 20) beginnt und die jeweils gegenüberliegende Fläche entweder eine vorstehende Rastfläche (32) oder eine von der Fläche abgehende, gegensinnig vorspringende schiefe Ebene (20) und der Feststeller (16) aus einer ungebremsten Position vor oder am flächennahen Beginn einer schiefen Ebene (19, 20) in Kontakt mit der gegenseitigen Rastfläche (32) oder schiefen Ebene (20) in eine gebremste Position der Lenkrolle (11) mit auf der schiefen Ebene (19, 20) aufgelaufenen Rastfläche (32) oder gegensinnig aufgelaufenen schiefe Ebene (19, 20) bewegt ist, in der die Bremsfläche des Feststellers (16) auf die Oberfläche der Rolle (13) angedrückt gehalten ist, **dadurch gekennzeichnet, dass** der Befestigungsflansch (14) topfförmig als Rollentopf (34) ausgebildet und in einer Ausnehmung eines Unterbodens eines Möbels (36) oder Gerätes versenkbar einbaubar ist, wobei der Rollentopf (34) eine zu einer Seite eines Möbels (36) horizontale Öffnung (27) aufweist, in die sich der Feststellhebel (35) hinein erstreckt, der mindestens in beiden Endlagen hinter die Kontur des Rollentopfes (34) und des Möbels (36) zurücktritt.

2. Feststellbare Lenkrolle nach Anspruch 1, **dadurch gekennzeichnet, dass** der Feststeller (16) eine scheibenförmige runde Grundform mit den oberen und unteren Funktionsflächen (17, 18) aufweist sowie einen sich radial erstreckenden Feststellhebel (35) und dass der Feststeller (16) um die vertikale Hochachse um die Tragachse (33) herum verschwenkbar ausgebildet ist.

3. Feststellbare Lenkrolle nach einem der vorgenannten Ansprüche, **dadurch gekennzeichnet, dass** sich der schiefen Ebene (19, 20) endseitig eine horizontale Rastfläche (32) anschließt.

4. Feststellbare Lenkrolle nach einem der vorgenannten Ansprüche, **dadurch gekennzeichnet, dass** sich von der Funktionsfläche (17, 18) des Befestigungsflansches (14) ein Führungs- und Haltestift (38) in Richtung und in oder durch eine Führungsausnehmung (39) des Feststellers (16) erstreckt.

5. Feststellbare Lenkrolle nach einem der vorgenannten Ansprüche, **dadurch gekennzeichnet, dass** die Rolle (13) als Doppelrolle ausgebildet ist und sich die Bremsfläche des Feststellers (16) im festgestellten Zustand auf beiden Rollen (13) abstützt.

6. Feststellbare Lenkrolle nach Anspruch 1, **dadurch gekennzeichnet, dass** die schiefen Ebenen (19, 20) als ein- oder mehrzügige Gewindegänge ausgebildet sind.

7. Feststellbare Lenkrolle nach Anspruch 1, **dadurch gekennzeichnet, dass** der Feststeller (16) linear zwischen dem Bewegungsflansch (14) und der Rolle (13) verschieblich angeordnet ist und die schiefe Ebene (19, 20) gradlinig ausgebildet ist.

8. Feststellbare Lenkrolle nach einem der vorgenannten Ansprüche, **dadurch gekennzeichnet, dass** sie aus einer Rolle (13) oder Doppelrolle, einem einteiligen Lagerkörper (12), einer Rollenachse, einer Tragachse (33), einem einteiligen Befestigungsflansch (14) und einem einteiligen Feststeller (16) besteht.

## Claims

1. Lockable caster wheel for rollable furniture and devices, comprising a wheel (13) or double wheel which is mounted on a horizontal transverse axis of a bearing body (12) so as to be pivotable about a vertical axis, and comprising a fastening flange (14) having a pivot bearing (15), and a locking device (16) which can be lowered onto the wheel (13),
the locking device (16) being arranged movably between the fastening flange (14) and the wheel (13) and having upper and lower functional surfaces (17, 18) that have said flange and said wheel,
a lower functional surface (18) between the locking device (16) and the wheel (13) forming a horizontal braking surface in each angular position of the wheel (13), and
an upper functional surface (17) between the locking device (16) and the fastening flange (14) and/or the flange surface thereof that faces the locking device (16) having at least one inclined plane (19, 20) which projects toward the opposite surface and which starts at the transition of the horizontal surface of the locking device (16) and/or of the fastening flange (14) to the at least one inclined plane (19, 20), and the respectively opposite surface either a protruding latching surface (32) or an oppositely projecting inclined plane (20) starting from the surface, and the locking device (16) being moved from an unbraked position in front of or at the start, close to the surface, of an inclined plane (19, 20) in contact with the mutual latching surface (20) or inclined plane (20), into a braked position of the caster wheel (11), in which the latching surface (32) runs onto the inclined plane (19, 20) or in which the inclined plane (19, 20) is run onto in the opposite direction, and in which the braking surface of the locking device (16) is held pressed against the surface of the wheel (13), **characterized in that** the fastening flange (14) is designed as a wheel cup (34) in the manner of a cup and can be retractably installed in a recess of an underbody of an item of furniture (36) or of a device, the wheel cup (34) having an opening (27) which is horizontal to one side of an item of furniture (36) and into which the locking lever (35) extends, which lever extends behind the contour of the wheel cup (34) and of the furniture (36) at least in both end positions.

2. Lockable caster wheel according to claim 1,
**characterized in that** the locking device (16) has a disc-shaped round basic shape having the upper and lower functional surfaces (17, 18), and a radially extending locking lever (35), and **in that** the locking device (16) is designed to be pivotable about the support shaft (33) about the vertical axis.

3. Lockable caster wheel according to either of the preceding claims,
**characterized in that** a horizontal latching surface (32) is attached to the inclined plane (19, 20) at the end.

4. Lockable caster wheel according to any of the preceding claims,
**characterized in that** a guiding and retaining pin (38) extends from the functional surface (17, 18) of the fastening flange (14) towards and into or through a guide recess (39) in the locking device (16).

5. Lockable caster wheel according to any of the preceding claims,
**characterized in that** the wheel (13) is designed as a double wheel and the braking surface of the locking device (16) is supported, in the locked state, on both wheels (13).

6. Lockable caster wheel according to claim 1,
**characterized in that** the inclined planes (19, 20) are designed as single- or multi-pass threads.

7. Lockable caster wheel according to claim 1,
**characterized in that** the locking device (16) is arranged so as to be linearly movable between the movement flange (14) and the wheel (13), and the inclined plane (19, 20) is designed to be straight.

8. Lockable caster wheel according to any of the preceding claims,
**characterized in that** it consists of a wheel (13) or double wheel, a one-piece bearing body (12), a wheel axle, a support shaft (33), a one-piece fastening flange (14) and a one-piece locking device (16).

## Revendications

1. Roue pivotante pouvant être bloquée pour des meubles et appareils pouvant rouler, comportant une roue (13) ou une double roue montée sur un axe transversal horizontal d'un corps de palier (12) et pouvant pivoter autour d'un axe de hauteur vertical et comportant une bride de fixation (14) comportant un palier pivotant (15) ainsi qu'un dispositif de blocage (16) pouvant être abaissé sur la roue (13),
le dispositif de blocage (16) étant disposé mobile entre la bride de fixation (14) et la roue (13) et présentant des surfaces fonctionnelles supérieure et inférieure (17, 18) avec celles-ci,
une surface fonctionnelle inférieure (18) entre le dispositif de blocage (16) et la roue (13) formant une surface de freinage horizontale dans chaque position angulaire de la roue (13) et
une surface fonctionnelle supérieure (17) entre le dispositif de blocage (16) et la bride de fixation (14) et/ou sa surface de bride tournée vers le dispositif de blocage (16) présentant au moins un plan incliné (19, 20) faisant saillie en direction de la surface opposée, lequel plan commençant au niveau de la transition entre la surface horizontale du dispositif de blocage (16) et/ou de la bride de fixation (14) et l'au moins un plan incliné (19, 20) et la surface respectivement opposée soit une surface d'encliquetage (32) faisant saillie, soit un plan incliné (20) faisant saillie en sens inverse depuis la surface, et le dispositif de blocage (16) étant déplacé depuis une position non freinée, avant ou au début proche de la surface d'un plan incliné (19, 20) en contact avec la surface d'encliquetage (32) ou le plan incliné (20) mutuel, vers une position freinée de la roue pivotante (11) avec la surface d'encliquetage (32) remontant sur le plan incliné (19, 20) ou le plan incliné (19, 20) remontant en sens contraire, dans laquelle position freinée la surface de freinage du dispositif de blocage (16) est maintenue pressée contre la surface de la roue (13), **caractérisée en ce que** la bride de fixation (14) est réalisée en forme de pot en tant que pot de roues (34) et peut être encastrée de manière rétractable dans un évidement d'un soubassement d'un meuble (36) ou d'un appareil, le pot de roues (34) présentant une ouverture (27) horizontale sur un côté d'un meuble (36) dans laquelle s'étend le levier de blocage (35), lequel recule derrière le contour du pot de roues (34) et du meuble (36) au moins dans les deux positions finales.

2. Roue pivotante pouvant être bloquée selon la revendication 1,
**caractérisée en ce que** le dispositif de blocage (16) présente une forme de base ronde en forme de disque comportant les surfaces fonctionnelles supérieure et inférieure (17, 18) ainsi qu'un levier de blocage (35) s'étendant radialement et **en ce que** le dispositif de blocage (16) est réalisé de manière à pouvoir pivoter autour de l'axe de hauteur vertical autour de l'axe de support (33).

3. Roue pivotante pouvant être bloquée selon l'une des revendications précédentes,
**caractérisée en ce qu'**une surface d'encliquetage (32) horizontale se raccorde au plan incliné (19, 20) côté extrémité.

4. Roue de guidage pouvant être bloquée selon l'une des revendications précédentes,
**caractérisée en ce qu'**une broche de guidage et de retenue (38) s'étend depuis la surface fonctionnelle (17, 18) de la bride de fixation (14) en direction et dans ou à travers un évidement de guidage (39) du dispositif de blocage (16).

5. Roue de guidage pouvant être bloquée selon l'une des revendications précédentes,
**caractérisée en ce que** la roue (13) est réalisée en tant que double roue et la surface de freinage du dispositif de blocage (16) s'appuie sur les deux roues (13) à l'état bloqué.

6. Roue de guidage pouvant être bloquée selon la revendication 1,
**caractérisée en ce que** les plans inclinés (19, 20) sont réalisés en tant que filets à un ou plusieurs passages.

7. Roue de guidage pouvant être bloquée selon la revendication 1,
**caractérisée en ce que** le dispositif de blocage (16) est disposé de manière à pouvoir coulisser linéairement entre la bride de déplacement (14) et la roue (13) et le plan incliné (19, 20) est réalisé de manière rectiligne.

8. Roue de guidage pouvant être bloquée selon l'une des revendications précédentes,
**caractérisée en ce qu'**elle est constituée d'une roue (13) ou d'une double roue, d'un corps de palier (12) monobloc, d'un axe de roue, d'un axe de support (33), d'une bride de fixation (14) monobloc et d'un dispositif de blocage (16) monobloc.
